# NOUVEAU FASCICULE DE BREVET EUROPEEN

(11) **EP 1 349 817 B2**
(45) Date de publication et mention de la décision concernant l'opposition: **16.01.2013**
(45) Mention de la délivrance du brevet: 25.10.2006
(21) Numéro de dépôt: 02711924.7
(22) Date de dépôt: 08.01.2002
(51) Int. Cl.: C03B 33/09, C03B 33/023, C03B 33/033

(54) **PROCEDE DE DECOUPE DES BORDS D'UN RUBAN CONTINU DE VERRE ET LE DISPOSITIF DE MISE EN OEUVRE CE PROCEDE**
VERFAHREM ZUM SCHNEIDEN DER RÄNDER EINES GLASBANDES SOWIE VORRICHTUNG ZUR DURCHFÜHRUNG DES VERFAHRENS
METHOD FOR CUTTING THE EDGES OF A CONTINUOUS GLASS RIBBON AND A DEVICE FOR IMPLEMENTING SAID METHOD

(30) Priorité: 12.01.2001 FR 0100436
(43) Date de publication de la demande: 08.10.2003
(73) Titulaire: SAINT-GOBAIN GLASS FRANCE, 92400 Courbevoie (FR)
(72) Inventeur: LUIZ, Mauro Lucio Nascimento. Rua Pedro Tursi, CEP-12230-090 Sao Paulo (BR)
(74) Mandataire: Colombier, Christian
(86) Numéro de dépôt international: PCT/FR2002/000038
(87) Numéro de publication internationale: WO 2002/055444

(56) Documents cités:
- GB-A- 493 004
- GB-A- 1 254 120
- US-A- 4 454 972
- US-A- 4 466 562
- US-A- 5 776 220

## Description

L'invention se rapporte au domaine de la production de verre plat et concerne plus particulièrement un procédé de découpe d'un ruban continu de verre.

On entend par ruban continu de verre, un ruban de verre issu d'un procédé de formage continu, notamment d'un procédé float ou d'un procédé de laminage du verre.

De manière générale, un ruban de verre continu est produit à partir d'un four verrier dans lequel on introduit des matières premières vitrifiables qui sont fondues pour former un verre visqueux. Ce verre visqueux alimente un outil de formage, comme par exemple un float où le verre visqueux est déversé sur un bain d'étain fondu maintenu en atmosphère réductrice, ou une lamineuse. On obtient ainsi, en sortie de l'outil de formage, un ruban de verre continu qui doit être découpé pour des applications ultérieures, notamment pour des applications dans le domaine du bâtiment et/ou de l'automobile.

La méthode traditionnelle permettant de découper le verre consiste d'abord à faire subir un recuit au ruban de verre puis à le découper dans le sens transverse par plateaux et ensuite à découper dans le sens longitudinal les bords de ces plateaux.

On nomme de manière usuelle « recuit », l'opération qui consiste à faire subir un cycle de refroidissement contrôlé au ruban de verre, de manière à relâcher progressivement les contraintes induites par l'étape de formage.

On nomme « sens transverse », un axe sensiblement perpendiculaire à l'axe de défilement du ruban de verre issu de l'outil de formage.

On nomme « sens longitudinal », un axe sensiblement parallèle à l'axe de défilement du ruban de verre issu de l'outil de formage.

On nomme « plateaux » des éléments du ruban de verre après découpe dans le sens transverse.

La méthode de découpe traditionnelle d'un ruban de verre continu comprend quatre étapes principales après que le ruban de verre ait été recuit :
première étape: traçage longitudinal, notamment avec une molette, d'une entaille sensiblement continue sur chacun des bords d'une face du ruban dans le sens longitudinal. Ce traçage s'effectue à une distance de quelques centimètres à quelques dizaines de centimètres du bord externe du ruban. Il a pour fonction de créer des défauts de surface sur le verre pour préparer la découpe ultérieure des bords du ruban, opération que l'on nomme « débandage ».
deuxième étape : traçage d'une entaille continue sur une face du ruban dans le sens transverse. Ce traçage s'effectue notamment avec une molette qui se déplace en biais par rapport à l'axe de défilement du ruban de verre, de manière à obtenir sur le ruban un traçage perpendiculaire à l'axe de défilement.
troisième étape : séparation du ruban au niveau du traçage transverse pour former un plateau à partir du ruban continu. Cette étape est nommée « rompage transverse ». Le plateau ainsi formé est alors généralement transporté par des rouleaux à une vitesse très supérieure à la vitesse de défilement du ruban continu.
quatrième étape « débandage » : séparation de la zone entre le bord externe du plateau et la ligne de traçage, zone nommée « bande », du reste du plateau pour obtenir un plateau qui constitue un produit fini ou semi-fini qui est ensuite stocké, généralement sensiblement verticalement, puis expédié chez le client sur des pupitres.

Cette quatrième étape, le débandage, comprend d'abord une phase où l'on produit un choc, par exemple à l'aide d'une roue métallique, en tête du plateau, à l'endroit où le traçage longitudinal a été effectué. Le choc crée un apport d'énergie tel qu'une fissure se développe et suit la ligne de défauts du trait de traçage. Une fissure générée dans ces conditions se propage très vite, notamment à la vitesse du son, soit environ 1000 m par seconde. La bande se détache alors du plateau, et est évacuée. Dans le cas de verre épais, on peut aider la propagation de la fissure grâce à l'utilisation de marteau, notamment pneumatique qui génèrent des chocs réguliers sur la face inférieure du plateau.

La technique de rompage transverse est notamment décrite dans le brevet USPN 4,072,259.

La technique de débandage a fait l'objet de nombreuses améliorations, exposées par exemple, dans les brevets USPN 4,196,830, USPN 4,285,451, USPN 4,466,562, USPN 4,489,870.

Ces brevets décrivent des améliorations de la technique classique mentionnée ci-dessus, notamment et respectivement la possibilité de faciliter le débandage par un réchauffement/refroidissement local du verre, de découper les bandes à partir de deux traçages longitudinaux parallèles sur la même face, ou à partir de deux traçages longitudinaux en regard l'un de l'autre sur chacune des faces du verre, de développer des moyens permettant d'appliquer un moment sur la bande par application d'une charge près du bord externe de la bande de manière à ouvrir la fissure à partir du traçage.

On note que toutes ces améliorations portent sur des moyens qui agissent après que le ruban continu ait été découpé pour former des plateaux, c'est-à-dire après le rompage transverse.

Ces techniques traditionnelles de débandage sont relativement bien adaptées aux processus industriels pour la production de verre d'épaisseur standard, notamment entre 3 et 8 mm d'épaisseur.

Cependant de nombreux problèmes apparaissent pour la découpe des bords quand l'épaisseur du ruban est soit inférieure, soit supérieure à celle des verres standards.

Pour les verres minces, notamment dont l'épaisseur est égale ou inférieure à 1 mm, on observe très fréquemment la présence de spliures (voir par exemple : « lateral cracks », Fractography of Glass - Bradt, R.C. ; Tressler, R.E., Plenum Press, New-York, 1994) sur la tranche débandée avec les techniques traditionnelles. Ce type de défaut nuit considérablement aux propriétés mécaniques du verre. De tels défauts sont inacceptables pour le client et conduisent à des taux de rebut très élevés.

Pour les verres épais, notamment dont l'épaisseur est supérieure ou égale à 10 mm, en particulier supérieure ou égale à 15 mm, on observe des tranches, débandées avec les techniques traditionnelles, présentant de nombreux défauts. D'une part les tranches ne sont, en général, pas perpendiculaires aux faces de plus grande dimension (faces correspondant aux faces horizontales du ruban continu de verre), mais en biseau.

On observe également de nombreux défauts qui peuvent être source de faiblesse mécanique, notamment ceux que l'homme du métier dénomme des écailles, des becs, des coins cassés, des fissures branchées.

Ce type de défauts doit être éliminé pour l'utilisation des plateaux en tant que produits finis, notamment pour des applications où l'on souhaite tremper le verre car l'opération de trempe sollicite très fortement les défauts du verre, et conduit souvent à une casse si des défauts sont présents.

Il faut noter que l'essentiel de la production de verre épais est destiné à des applications où une trempe du verre est requise.

Le document US 4049167 décrit la génération de fissures longitudinales par des marteaux pneumatiques et leur propagation avant le rompage transverse.

Pour éliminer de tels défauts induits par le débandage avec les techniques traditionnelles, on procède à une étape de façonnage, qui consiste à enlever de la matière, notamment par abrasion, de manière à redresser les bords et à obtenir une face dépourvue de défauts susceptibles de conduire à des casses pendant la trempe. Cette opération est longue et coûteuse.

Le but de la présente invention est de remédier aux inconvénients ci-dessus, notamment en permettant d'obtenir des tranches, après débandage, dépourvues de défauts majeurs et permettant ainsi d'utiliser les plateaux produits avec peu, ou même pas de façonnage, pour les étapes ultérieures conduisant à la production d'un produit fini ou semi fini.

Le problème de l'obtention de tranches, dépourvues de défauts majeurs après débandage de plateaux issus d'un ruban continu de verre est résolu par la mise en oeuvre d'un procédé de découpe des bords d'un ruban continu de verre, défilant à une vitesse, V_{R}, comprenant une étape de traçage longitudinal qui génère une ligne de traçage, notamment avec une molette, une étape ultérieure de traçage transverse, puis d'une étape de rompage transverse, et qui comprend une étape intermédiaire entre l'étape de traçage longitudinal et l'étape de traçage transverse consistant à générer au moins une fissure longitudinale dans au moins une partie substantielle de l'épaisseur du ruban continu de verre, notamment dans toute l'épaisseur dudit ruban continu de verre, à partir de la ligne de traçage et à faire propager ladite fissure longitudinale à une vitesse, V_{F}, sensiblement égale et de sens opposé à la vitesse, V_{R}, de défilement du ruban continu de verre.

En effet les inventeurs ont su montrer qu'il est ainsi possible d'obtenir des plateaux présentant des bords sensiblement perpendiculaires aux faces desdits plateaux, et que ces bords présentent une surface quasiment lisse, connue sous le nom de surface miroir.

Cet effet remarquable est particulièrement surprenant car il est connu de l'homme du métier que les bords obtenus après débandage selon les techniques classiques sont de qualité médiocre et comprennent de nombreux défauts, notamment pour les plateaux de verre minces et pour les plateaux de verre épais.

Ainsi, l'invention concerne en premier lieu un procédé de découpe des bords d'un ruban continu de verre comprenant une face supérieure et une face inférieure, défilant à une vitesse (V_{R}), comprenant une étape de traçage longitudinal qui génère une ligne de traçage, notamment avec une molette, une étape ultérieure de traçage transverse, puis d'une étape de rompage transverse, comprenant après l'étape de traçage longitudinal, une étape consistant à générer au moins une fissure longitudinale dans au moins une partie substantielle de l'épaisseur du ruban continu de verre, notamment dans toute l'épaisseur dudit ruban continu de verre, à partir de la ligne de traçage, la fissure étant générée et propagée pour mener à une tranche longitudinale présentant une surface miroir, par un moyen de génération et de propagation de fissure instaurant un système de contrainte exercé par une flexion ou un gradient thermique dans l'épaisseur du verre et on fait propager ladite fissure longitudinale à une vitesse (V_{F}) sensiblement égale et de sens opposé à la vitesse (V_{R}) de défilement du ruban continu de verre, l'étape de rompage transverse étant située après l'étape générant au moins une fissure longitudinale.

On observe, avec le procédé selon l'invention, des bords lisses et dépourvus de défauts majeurs pour toutes les épaisseurs des plateaux de verre, notamment pour des verres minces et des verres épais.

La mise en oeuvre de ce procédé conduit à un dispositif remarquablement simple, mais d'une très grande efficacité.

Les moyens adaptés pour générer une fissure longitudinale sont avantageusement disposés près de chaque bord externe du ruban continu de verre de manière à faire se propager une fissure simultanément sur chaque côté du ruban et à procéder ultérieurement au débandage des bords de chaque côté en même temps.

On observe ainsi sur une ligne l'apparition d'une fissure dans une partie substantielle de l'épaisseur du verre, notamment au moins la moitié de l'épaisseur, voir une fissure traversante, en amont des moyens permettant de générer la fissure, et en aval des moyens de traçage longitudinal. Dans la suite du texte on nomme cette fissure « fissure longitudinale ». Cette fissure longitudinale, visible à l'oeil nu avec la presque totalité des verres, semble sensiblement immobile pour un observateur situé à côté de la ligne. En effet la résultante de vitesse entre la vitesse de défilement du ruban de verre V_{R}, et la vitesse de propagation de la fissure V_{F} est sensiblement nulle. On entend par « sensiblement » une variation possible de l'ordre d'un facteur 2. Cette variation peut donner à un observateur situé à côté de la ligne l'impression que la fissure se déplace, tout en restant située entre le moyen qui permet de la générer et le moyen de découpe longitudinal.

Les variations de vitesse de propagation de la fissure peuvent notamment être liées aux hétérogénéités des contraintes résiduelles dans le verre, suite à l'opération de recuisson.

Le ruban continu de verre est ainsi constitué de trois zones après le moment où la fissure longitudinale a été générée : deux zones de bord et une zone centrale. Quand la fissure est traversante, ces zones apparaissent contiguës et on peut dire usuellement qu'elles « restent collées » entre elles, bien qu'aucun liant ne les réunissent. L'opération de traçage transverse s'effectue ensuite de part en part de ces trois zones. Une étape de rompage lui fait suite où des moyens connus sont utilisés pour initier et se faire propager une fissure transverse qui conduit à la séparation d'un plateau d'avec le ruban de verre.

Le rompage s'effectue, notamment en soulevant le ruban au niveau du marquage transverse par un rouleau en contact avec le ruban sur toute sa largeur en mettant toute la section transversale en flexion.

Dans le cas du procédé selon l'invention cette étape joue un double rôle car il s'y produit à la fois la séparation du plateau à partir du ruban, mais aussi la séparation des zones de bord, les bandes, qui se désolidarisent alors de la zone centrale et sont recueillies dans des trappes.

Selon un mode de réalisation de l'invention, la fissure longitudinale est générée et se propage par mise en flexion progressive du ruban continu de verre dans une zone située sous la ligne de traçage longitudinale, entre le traçage longitudinal et le traçage transverse.

De cette manière la mise en flexion pemet le développement d'une fissure longitudinale à partir de la ligne de traçage longitudinale et sa propagation en sens opposé à celui du défilement du ruban du verre.

En effet la mise en flexion progressive permet de contrôler très précisément l'ouverture de la fissure longitudinale et de maîtriser la vitesse de propagation de la fissure ainsi générée.

Selon une variante particulièrement avantageuse, la mise en flexion du ruban continu de verre s'obtient par l'application d'une force, F_{I}, sur la face inférieure dudit ruban continu de verre, de manière à lever légèrement le ruban de verre dans une zone située sous la ligne de traçage longitudinal ou bien dans le voisinage de la ligne de traçage longitudinale, du côté de cette ligne le plus éloigné du bord extérieur du ruban, en considérant le bord extérieur le plus proche.

Pour fixer un ordre d'idée, la charge appliquée sur une telle roue est de l'ordre de 1000 N, c'est-à-dire de préférence comprise entre 500 et 2000 N.

Pour un ruban de verre de 15 mm d'épaisseur auquel on souhaite enlever des bords d'environ 200 mm de largeur, on peut notamment appliquer une force d'environ 900 N, quand cette force est appliquée à environ 70 cm du point d'appui.

Pour un ruban de verre de 19 mm d'épaisseur, auquel on souhaite enlever des bords d'environ 250 mm de largeur, on peut notamment appliquer une force d'environ 1200 N.

Ces indications ne sont nullement limitatives car la charge à appliquer dépend de l'état de recuisson du verre, et l'homme du métier peut facilement la déterminer en faisant varier peut légèrement ladite charge tout en observant l'effet de cette variation de charge sur l'avancement de la fissure longitudinale.

Selon une autre réalisation préférée de l'invention, on applique une force, F_{S}, sur la face supérieure du ruban continu de verre dans une zone comprise entre la ligne de traçage longitudinale et le bord externe du ruban continu de verre pour contribuer à générer et faire propager la fissure longitudinale.

Ce mode de réalisation convient particulièrement pour la production de verre d'épaisseur mince et moyenne, et permet de favoriser le guidage de la fissure longitudinale afin d'en faciliter la propagation à l'aplomb du traçage longitudinal.

Bien que l'application d'une force portant sur la face supérieure ne soit pas indispensable pour des verres épais, notamment de plus de 15 mm d'épaisseur, ce mode de réalisation n'est pas exclu avec ces verres. Il peut même se révéler particulièrement avantageux si on veut diminuer la largeur des bandes et ainsi faire des économies de matière permettant une augmentation de rendement de la ligne.

Selon un autre mode de réalisation du procédé selon l'invention, un ou des apports de chaleur et/ou de refroidissement contribue(nt) à générer et faire propager la fissure longitudinale.

L'apport de chaleur peut notamment être obtenu par l'utilisation d'un faisceau laser qui interagit avec le verre, le faisceau laser étant colimaté pour être focalisé sur la face supérieure du ruban de verre.

Le refroidissement peut notamment être obtenu par au moins un rouleau, de préférence un rouleau situé de chaque côté de la fissure, en contact avec la face inférieure du verre. Ce type de rouleau refroidisseur est susceptible d'être refroidi par un liquide avec lequel il est en contact, par exemple un liquide refroidi contenu dans un bac, dans lequel plonge le rouleau.

L'invention concerne également le dispositif selon la revendication 8.

Ce dispositif pour la découpe des bords d'un ruban continu de verre comprend des moyens de traçage longitudinal, des moyens de traçage transverse, des moyens de rompage transverse et comprend en outre des moyens, notamment des moyens mécaniques, pour générer et faire propager la fissure longitudinale.

Dans un mode de réalisation préféré du dispositif selon l'invention, au moins un moyen mécanique qui permet de générer et faire propager la fissure longitudinale est une roue susceptible d'être mise en contact avec la face inférieure d'un ruban continu de verre.

Dans une version particulièrement avantageuse, au moins une roue est asservie par des moyens d'asservissement, comprenant notamment un vérin, notamment relié à un socle de manière à ce que, soit la position de cette roue, est fixe, soit la force, F_{I}, appliquée sous le ruban continu de verre est constante.

Selon un mode de réalisation de ce dispositif, au moins un moyen mécanique pour générer et faire propager la fissure longitudinale est une roue située sur la face supérieure du ruban continu de verre, notamment reliée à un vérin.

On peut, de manière équivalente aux roues décrites ci-dessus, utiliser un ou des galets sur lesquels le verre est susceptible de glisser sans être détériorer. On peut, par exemple utiliser des galets en cuivre revêtus d'une couche de MoS₂.

Selon une autre variante de ce dispositif les moyens mécaniques sont remplacés ou complétés par au moins un moyen d'apport thermique ou de refroidissement d'au moins une zone d'une face du ruban continu de verre, situé entre les moyens de traçage longitudinal et les moyens de traçage transverse.

Selon un mode de réalisation préféré, au moins un moyen d'apport thermique et/ou de refroidissement est un rouleau chauffé, respectivement refroidi, en contact avec une surface supérieure, respectivement inférieure du ruban continu de verre.

De manière équivalente, il est possible d'utiliser un galet chauffé et/ou refroidi. En outre une roue et/ou un galet peut simultanément être un moyen mécanique susceptible d'appliquer une forme F_{I} ou F_{S}, respectivement sous ou sur le ruban de verre, et être un moyen respectivement de refroidissement ou d'apport thermique.

On peut par exemple, utiliser des roues ou des galets dans lesquels circule un fluide caloporteur par exemple de l'azote liquide, ou un liquide chauffé.

On peut ainsi, grâce à la création de gradient thermique dans l'épaisseur du verre, instaurer un système de contrainte équivalent à celui instauré par une flexion et ainsi contribuer à générer et propager une fissure longitudinale.

Selon un autre mode de réalisation, au moins un moyen d'apport thermique est un laser.

L'invention concerne également un plateau de verre obtenu par le procédé selon l'invention, où les tranches longitudinales sont sensiblement perpendiculaires aux faces inférieure et supérieure du plateau et présente une surface miroir.

Comme on l'a mentionné ci-dessus, un tel plateau est particulièrement avantageux car il permet de réduire considérablement les opérations ultérieures de façonnage.

Les plateaux de verre épais selon l'invention sont particulièrement adaptés à la production de produits en verre épais, notamment d'au moins de 10 mm d'épaisseur, voire d'épaisseur supérieure ou égale à 15 mm et même supérieure ou égale à 17 mm, par exemple pour des applications dans le bâtiment ou dans la décoration intérieure.

Les plateaux de verre mince selon l'invention sont particulièrement adaptés à la production de produits en verre mince, notamment d'épaisseur inférieure ou égale à 1 mm, par exemple pour des applications en tant qu'écran.

En général, les plateaux de verre selon l'invention sont particulièrement adaptés pour la production d'objets en verre trempé.

D'autres détails et caractéristiques avantageux de l'invention ressortirons ci-après, de la description d'exemples de réalisation de l'invention en référence aux figures annexées qui représentent :
- **figure 1** : vue de dessus partielle d'une ligne de production et de découpe d'un ruban continu de verre plat ;
- **figure 2** **:** vue partielle selon la coupe A-A' de la figure 1 ;
- **figure 3** **:** vue partielle en coupe perpendiculairement à l'axe de défilement du ruban de verre ;
- **figure 4** : variante de la vue partielle en coupe perpendiculairement à l'axe de défilement du ruban de verre ;
- **figure 5** **:** vue d'un bord débandé d'un plateau de verre épais obtenu à partir d'un ruban de verre continu selon les techniques traditionnelles de débandage ;
- **figure 6** : vue d'un bord débandé d'un plateau de verre épais obtenu à partir d'un ruban de verre continu, selon l'invention.

On précise tout d'abord, que par souci de clarté, toutes les figures ne respectent pas rigoureusement les proportions entre les divers éléments représentés.

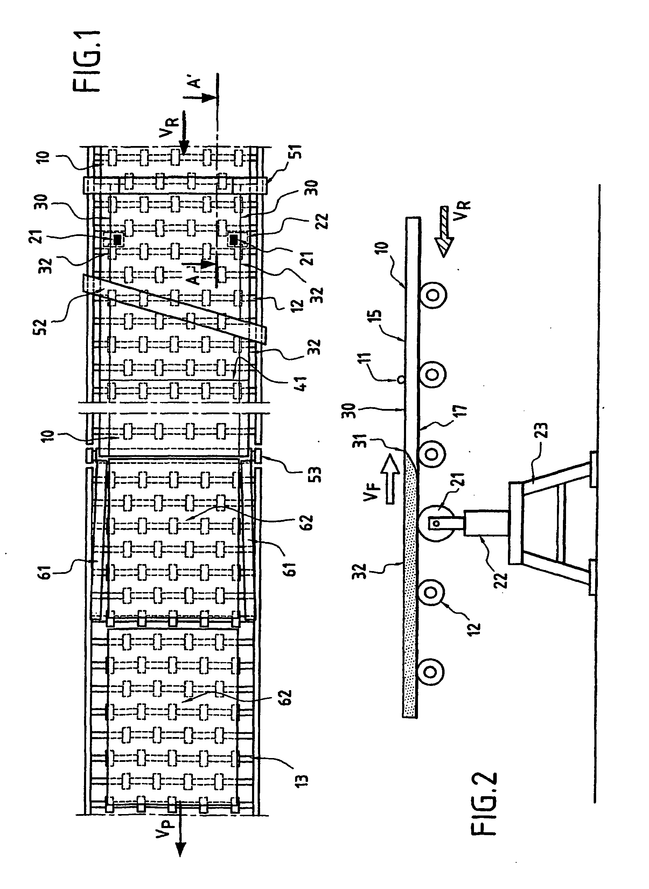

La **figure 1** représente une vue de dessus partielle d'une ligne de production et de découpe d'un ruban continu de verre plat.

Le ruban de verre plat, 10, provient usuellement d'une zone de recuisson et pénètre dans la zone de découpe à une vitesse de défilement du ruban noté V_{R}, porté par des rouleaux d'entraînement 12. Ce ruban comporte généralement des imperfections sur chacun de ses bords externes, imperfections notamment dues aux marques des outils, par exemple nommés top-roll, qui permettent de maîtriser la largeur du ruban en tirant ou en comprimant les bords. Dans le cas de ruban de verre épais, les bords sont en général moins épais que l'épaisseur moyenne du ruban et à l'inverse, dans le cas de rubans de verre minces les bords sont plus épais que l'épaisseur moyenne du ruban.

Pour enlever ces bords on procède à une opération de débandage. Celle-ci commence usuellement par une étape de traçage longitudinal, à l'aide de moyen de traçage 51 près de chacun des bords externes du ruban, notamment à l'aide d'une molette 11. On trace ainsi une ligne d'entaille du verre quasi continue 30 dans le sens longitudinal du ruban.

La ligne de production et de découpe du ruban de verre comprend en aval des moyens de traçage longitudinal 51, des moyens de traçage transverse 52 qui génèrent une ligne de traçage transverse 41, puis un organe de rompage, représenté ici sous la forme d'un rouleau 53 qui se soulève sous chaque ligne de traçage transverse 41, pour séparer un plateau 62 du ruban continu 10. Les rouleaux d'entraînement 13, situés après l'organe de rompage 53 entraînent les plateaux découpés à une vitesse V_{P}, supérieure à la vitesse de défilement du ruban continu V_{R} afin de permettre l'extraction ultérieure des plateaux usuellement par relevage, pour ensuite les empiler.

Selon l'invention on dispose un moyen situé entre les moyens de traçage longitudinal 51 et les moyens de traçage transverse 52, permettant de générer une fissure traversante à partir de la ligne de traçage longitudinale 30. On a représenté ici ce moyen sous la forme d'une roue 21, située sous le ruban de verre, et montée sur un socle portant un vérin 22.

Cette roue est située approximativement à mi distance entre les moyens de traçage longitudinal 51 et le moyen de traçage transverse 52. On peut notamment situer cette roue à une distance de 0,60 à 1 mètre, en aval des moyens de traçage longitudinal 51. Une fissure longitudinale, notamment traversante, se développe de chaque côté des bords externes du ruban de verre 10. Après l'opération de rompage transverse, obtenu grâce au rouleau 53, le plateau 61 se détache du ruban 10 et en même temps les bandes 61 de chacun des côtés du plateau 62 se séparent et sont évacuées.

La **figure 2** représente une vue partielle selon la coupe A-A' de la figure précédente. L'observation se fait face à la tranche du ruban continu de verre 10 et permet de préciser l'étape de genèse et de propagation de la fissure longitudinale 32. Dans le cas représenté ici, cette fissure longitudinale est traversante. Après le traçage 30 par la molette 11 sur la face supérieure 15 du ruban de verre, la fissure commence à se développer à partir d'un point 31 nommé tête de fissure pour progressivement traverser l'épaisseur de la tranche du ruban de verre 10. Cette fissure se propage à une vitesse V_{F}, de sens opposé à la vitesse de propagation du ruban V_{R}, et de valeur sensiblement égale.

Pour générer et faire propager cette fissure 32 on applique une force sur la face inférieure 17 du ruban de verre à l'aide de la roue 21, montée sur le vérin 22 lequel est fixé au sol par un support, par exemple par le trépied 23.

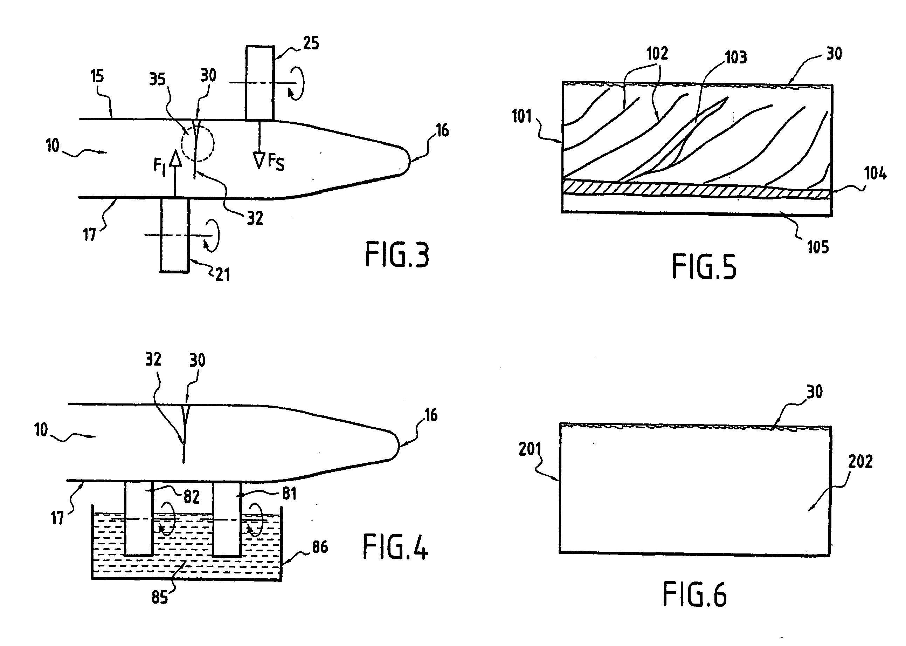

La **figure 3** représente une vue partielle en coupe perpendiculaire à l'axe de défilement du ruban de verre, située entre le moyen de traçage 51 et la roue 21. Cette figure représente un agrandissement de la zone proche d'un bord externe du ruban 10, selon une vue transversale à l'axe de défilement du ruban. On précise ainsi l'emplacement de la roue 21 en contact avec la face inférieure 17 du ruban de verre. Dans cette présentation, la roue 21 est située dans une zone proche de la fissure 32 située du côté opposé de la ligne du trait de traçage 30 par rapport au bord externe 16 du ruban de verre 10. Cette roue 21 peut également être disposée sous le trait de traçage 30. On applique ainsi une force F_{I} qui vient créer, dans la tranche du ruban, une zone 35 en extension.

Comme le montre également la **figure 3**, il est possible d'utiliser une roue 25 en appui sur la face supérieure 15 du ruban de verre et qui permet d'appliquer une force F_{S} qui contribue également à générer des contraintes d'extension à l'aplomb du trait de traçage 30, dans la zone 35. Cette roue 25 est située dans la zone comprise entre le trait de traçage 30 et le bord externe 16 du ruban de verre 10.

La **figure 4** représente une variante de réalisation selon l'invention, observée de manière identique à l'observation rapportée en figure 3.

Dans cette variante on dispose des rouleaux 81, 82 en contact avec la face inférieure 17 du ruban continu de verre 10, de part et d'autre du trait de traçage longitudinal 30. Ces rouleaux sont refroidis par immersion dans un liquide 85, à température inférieure à la température ambiante, contenu dans un bac 86.

Il en résulte des efforts qui conduisent à la génération puis à la propagation de la fissure 32 à partir du trait de traçage 30.

Un autre mode de réalisation de cette variante peut être obtenu avec des rouleaux 81, 82 refroidis par circulation d'azote liquide à l'intérieur de ces rouleaux.

Ce dispositif est particulièrement adapté à la production de verres minces.

II est également possible d'associer au rouleau 21 décrit en figure 3 un des systèmes de refroidissement ci-dessus.

La **figure 5** représente la tranche 101 d'un plateau de verre épais dont le bord a été débandé suivant les techniques traditionnelles. Cet exemple d'observation correspond à une tranche où le bord a été séparé par un choc, notamment le choc d'un marteau pneumatique qui vient taper sous la feuille pour faire propager la fissure qui permet de séparer les bandes des bords du corps principal du plateau. On observe de nombreux défauts, notamment des lignes 102 qui conduisent à la formation d'écailles 103, une zone rugueuse 104, que l'on peut attribuer à la propagation rapide de la fissure, une zone 105 généralement en biais.

La **figure 6** représente la tranche 201 d'un plateau de verre épais dont le bord a été débandé avec le procédé selon l'invention. La surface de cette tranche 201 est lisse. On note la présence de trace de la ligne de traçage longitudinal 30. La zone située en deçà de cette ligne de traçage est une zone miroir 202.

## Revendications

1. Procédé de découpe des bords d'un ruban continu de verre (10) comprenant une face supérieure et une face inférieure, ladite découpe menant à des tranches longitudinales, ledit ruban défilant à une vitesse (V_{R}), comprenant une étape de traçage longitudinal (51) qui génère une ligne de traçage (30), notamment avec une molette (11), une étape ultérieure de traçage transverse (52), puis d'une étape de rompage transverse (53), comprenant après l'étape de traçage longitudinal, une étape consistant à générer au moins une fissure longitudinale (32) dans au moins une partie substantielle de l'épaisseur du ruban continu de verre (10), notamment dans toute l'épaisseur dudit ruban continu de verre, à partir de la ligne de traçage (30) l'étape de rompage transverse étant située après l'étape générant au moins une fissure longitudinale, **caractérisé en ce que** la fissure est générée et propagée pour mener à une tranche longitudinale présentant une surface miroir, par un moyen de génération et de propagation de fissure instaurant un système de contrainte exercé par une flexion ou un gradient thermique dans l'épaisseur du verre, et **en ce que** l'on fait propager ladite fissure longitudinale (32) à une vitesse (V_{F}) sensiblement égale et de sens opposé à la vitesse (V_{R}) de défilement du ruban continu de verre (10).

2. Procédé selon la revendication précédente, **caractérisé en ce que** l'étape consistant à générer au moins une fissure longitudinale est une étape intermédiaire entre l'étape de traçage longitudinale et l'étape de traçage transverse.

3. Procédé de découpe selon la revendication précédente, **caractérisé en ce que** la fissure longitudinale (32) est générée et se propage par mise en flexion progressive du ruban continu de verre (10) dans une zone (35) située sous la ligne de traçage longitudinale (30), entre le traçage longitudinal (51) et le traçage transverse (52).

4. Procédé de découpe selon la revendication précédente, **caractérisé en ce que** la mise en flexion du ruban continu de verre (10) s'obtient par l'application d'une force (F₁) sur la face inférieure (17) dudit ruban continu de verre (10), de manière à lever légèrement le ruban de verre dans une zone située sous la ligne de traçage longitudinal (30) ou bien dans le voisinage de la ligne de traçage longitudinale (30), du côté de cette ligne le plus éloigné du bord extérieur (16) du ruban (10), en considérant le bord extérieur le plus proche.

5. Procédé de découpe selon l'une quelconque des revendications 3 à 4, **caractérisé en ce qu'**on applique une force (F_{S}) sur la face supérieure (15) du ruban continu de verre (10) dans une zone comprise entre la ligne de traçage longitudinale (30) et le bord externe (16) le plus proche de ladite ligne de traçage longitudinale pour contribuer à générer et faire propager la fissure longitudinale (32).

6. Procédé de découpe selon l'une des revendications précédentes, **caractérisé en ce que** un ou des apports de chaleur et/ou de refroidissement (81, 82) contribue(nt) à générer et faire propager la fissure longitudinale (32).

7. Procédé selon l'une des revendications précédentes **caractérisé en ce que** le traçage longitudinal est réalisé sur une seule des faces du ruban et **en ce que** le traçage transverse est réalisé sur une seule des faces du ruban.

8. Dispositif pour la découpe d'un ruban de verre continu (10) défilant à une vitesse (V_{R}), selon un procédé comprenant une étape de traçage longitudinal qui génère une ligne de traçage (30), une étape ultérieure de traçage transverse (52), puis une étape de rompage transverse (53) comprenant,
- (a) des moyens de traçage longitudinal (51),
- (b) des moyens de génération et de propagation de la fissure longitudinale (32) dans toute l'épaisseur dudit ruban continu de verre pour mener à une tranche longitudinale présentant une surface miroir, à partir de la ligne de traçage (30) et faisant propager ladite fissure longitudinale (32) à une vitesse (V_{F}) sensiblement égale et de sens opposé à la vitesse (V_{R}) de défilement du ruban continu de verre (10), lesdites moyens de génération et de propagation de fissure instaurant un système de contrainte exercé par une flexion ou un gradient thermique dans l'épaisseur du verre ;
- (c) des moyens de traçage transverse (52),
- (d) des moyens de rompage transverse (53),
les moyens (d) de rompage transverse étant placés après les autres moyens (a), (b) et (c) par référence au sens de défilement du ruban.

9. Dispositif selon la revendication précédente **caractérisé en ce que** les moyens sont placés dans l'ordre (a) puis (b) puis (c) puis (d) par référence au sens de défilement du ruban.

10. Dispositif selon l'une des deux revendications précédentes, **caractérisé en ce que** les moyens pour générer et faire propager la fissure longitudinale comprennent des moyens mécaniques (21, 22, 23, 25).

11. Dispositif selon la revendication précédente, **caractérisé en ce que** au moins un moyen mécanique pour générer et faire propager la fissure longitudinale (32) est une roue (21) susceptible d'être mise en contact avec la face inférieure (17) d'un ruban continu de verre (10).

12. Dispositif selon la revendication précédente, **caractérisé en ce qu'**au moins une roue (21) est asservie par des moyens d'asservissement, comprenant notamment un vérin (22), notamment relié à un socle (23) de manière à ce que, soit la position de cette roue (21), est fixe, soit la force (F₁) appliquée sous le ruban continu de verre (10) est constante.

13. Dispositif selon l'une des revendications 8 à 12, **caractérisé en ce que** au moins un moyen mécanique pour générer et faire propager la fissure longitudinale (32) est une roue (25) située sur la face supérieure (15) du ruban continu de verre (10), notamment reliée à un vérin.

14. Dispositif selon l'une des revendications 8 à 13 **caractérisé en ce qu'**il comprend au moins un moyen d'apport thermique et/ou de refroidissement (81, 82) d'au moins une zone d'une face du ruban continu de verre (10), situé entre les moyens de traçage longitudinal (51) et les moyens de traçage transverse (52).

15. Dispositif selon la revendication précédente, **caractérisé en ce que** au moins un moyen d'apport thermique et/ou de refroidissement est un rouleau chauffé, respectivement refroidi (81, 82), en contact avec une surface supérieure (15), respectivement inférieure (17) du ruban continu de verre (10).

16. Dispositif selon l'une des deux revendications précédentes, **caractérisé en ce que** au moins un moyen d'apport thermique est un laser.

## Claims

1. Method for cutting the edges of a continuous glass ribbon (10) comprising a top side and an underside; said cutting leading to longitudinal edge faces, said ribbon travelling at a velocity (V_{R}), comprising a longitudinal marking step (51) that generates a marked line (30), particularly with a cutting wheel (11), a subsequent transverse marking step (52), and then a transverse breaking step (53), comprising, after the longitudinal marking step, a step that consists in generating at least one longitudinal crack (32) in at least a substantial part of the thickness of the continuous glass ribbon (10), particularly throughout the thickness of said continuous glass ribbon, from the marked line (30), the transverse breaking step coming after the step generating at least one longitudinal crack, **characterized in that** the crack is generated and propagated, so as to lead to a longitudinal edge face having a mirrored surface, by a crack generation and propagation means that sets up a system of stresses applied by bending or a thermal gradient in the thickness of the glass, and **in that** said longitudinal crack (32) is made to propagate at a velocity (V_{F}) roughly equal to and in the opposite direction from the velocity (V_{R}) at which the continuous glass ribbon (10) is travelling.

2. Method according to the preceding claim, **characterized in that** the step that consists in generating at least one longitudinal crack is an intermediate step between the longitudinal marking step and the transverse marking step.

3. Cutting method according to the preceding claim, **characterized in that** the longitudinal crack (32) is generated and propagates by progressive bending of the continuous glass ribbon (10) in a region (35) situated under the longitudinal marked line (30) between the longitudinal marking (51) and the transverse marking (52).

4. Cutting method according to the preceding claim, **characterized in that** the continuous glass ribbon (10) is bent by applying a force (F_{I}) to the underside (17) of said continuous glass ribbon (10) so as to lift the glass ribbon slightly in a region situated under the longitudinal marked line (30) or alternatively near the longitudinal marked line (30) on the side of this line furthest away from the outside edge (16) of the ribbon (10) when considering the closest outside edge.

5. Cutting method according to either one of Claims 3 and 4, **characterized in that** a force (F_{S}) is applied to the top side (15) of the continuous glass ribbon (10) in a region lying between the longitudinal marked line (30) and the outside edge (16) closest to said longitudinal marked line to contribute to the generation and propagation of the longitudinal crack (32).

6. Cutting method according to one of the preceding claims, **characterized in that** one or more additions of heat and/or of cooling (81, 82) contributes or contribute to the generation and propagation of the longitudinal crack (32).

7. Method according to one of the preceding claims, **characterized in that** the longitudinal marking is performed on just one of the sides of the ribbon and **in that** the transverse marking is performed on just one of the sides of the ribbon.

8. Device for cutting a continuous glass ribbon (10) travelling at a velocity (V_{R}), using a method comprising a longitudinal marking step that generates a marked line (30), a subsequent transverse marking step (52), and then a transverse breaking step (53) comprising:
- (a) longitudinal marking means (51),
- (b) means for generating and causing the propagation of the longitudinal crack (32) throughout the thickness of said continuous glass ribbon, so as to lead to a longitudinal edge face having a mirrored surface from the marked line (30) and causing said longitudinal crack (32) to propagate at a velocity (V_{F}) roughly equal to and in the opposite direction from the velocity (V_{R}) at which the continuous glass ribbon (10) is travelling, said crack generation and propagation means setting up a system of stress applied by bending or a thermal gradient in the thickness of the glass,
- (c) transverse marking means (52),
- (d) transverse breaking means (53),
the transverse breaking means (d) being placed after the other means (a), (b) and (c) with reference to the direction in which the ribbon is travelling.

9. Device according to the preceding claim, **characterized in that** the means are placed in the order (a) then (b) then (c) then (d) with reference to the direction in which the ribbon is travelling.

10. Device according to either of the two preceding claims, **characterized in that** the means for generating and causing the propagation of the longitudinal crack comprises mechanical means (21, 22, 23, 25).

11. Device according to the preceding claim, **characterized in that** at least one mechanical means for generating and propagating the longitudinal crack (32) is a wheel (21) that can be brought into contact with the underside (17) of a continuous glass ribbon (10).

12. Device according to the preceding claim, **characterized in that** at least one wheel (21) is slaved by slaving means, particularly comprising a ram (22), particularly connected to a base (23), in such a way that either the position of this wheel (21) is fixed or the force (F_{I}) applied under the continuous glass ribbon (10) is constant.

13. Device according to one of Claims 8 to 12, **characterized in that** at least one mechanical means for generating and propagating the longitudinal crack (32) is a wheel (25) situated on the top side (15) of the continuous glass ribbon (10), and particularly connected to a ram.

14. Device according to one of Claims 8 to 13, **characterized in that** it comprises at least one means of applying heat and/or cooling (81, 82) to at least one region of one side of the continuous glass ribbon (10), this means being situated between the longitudinal marking means (51) and the transverse marking means (52).

15. Device according to the preceding claim, **characterized in that** at least one means of applying heat and/or cooling is a heated (or cooled) roll (81, 82) in contact with a top (15) (or bottom (17)) surface of the continuous glass ribbon (10).

16. Device according to either of the two preceding claims, **characterized in that** at least one means of applying heat is a laser.

## Patentansprüche

1. Verfahren zum Schneiden der Ränder eines endlosen Glasbandes (10), das eine Oberseite und eine Unterseite umfasst, wobei das Schneiden zu Längskanten führt, wobei das Band mit einer Geschwindigkeit (V_{R}) abläuft, umfassend einen Schritt zum Längsanreißen (51), der eine Anreißlinie (30) erzeugt, insbesondere mit einem Schneiderädchen (11), einen nachfolgenden Schritt zum Queranreißen (52), anschließend einen Schritt zum Querbrechen (53), nach dem Schritt des Längsanreißens einen Schritt, der darin besteht, wenigstens einen Längsriss (32) in wenigstens einem wesentlichen Teil der Dicke des endlosen Glasbandes (10), insbesondere in der gesamten Dicke des endlosen Glasbandes, von der Anreißlinie (30) aus zu erzeugen, wobei der Schritt des Querbrechens nach dem wenigstens einen Längsriss erzeugenden Schritt gelegen ist, **dadurch gekennzeichnet, dass** der Riss durch ein Risserzeugungs- und -fortpflanzungsmittel, das ein durch ein Biegen oder einen Wärmegradienten in der Dicke des Glases ausgeübtes Spannungssystem aufbaut, erzeugt und fortgepflanzt wird, um zu einer eine Spiegelfläche aufweisenden Längskante zu führen, und dass der Längsriss (32) mit einer Geschwindigkeit (V_{F}) fortgepflanzt wird, die im Wesentlichen gleich der Ablauflaufgeschwindigkeit (V_{R}) des endlosen Glasbandes (10) ist und eine hierzu entgegengesetzte Richtung aufweist.

2. Verfahren nach dem vorstehenden Anspruch, **dadurch gekennzeichnet, dass** der Schritt, der darin besteht, wenigstens einen Längsriss zu erzeugen, ein Zwischenschritt zwischen dem Schritt des Längsanreißens und dem Schritt des Queranreißens ist.

3. Schneidverfahren nach dem vorstehenden Anspruch, **dadurch gekennzeichnet, dass** der Längsriss (32) durch schrittweises Biegen des endlosen Glasbandes (10) in einem unter der Längsanreißlinie (30) gelegenen Bereich (35) zwischen dem Längsanreißen (51) und dem Queranreißen (52) erzeugt wird und sich fortpflanzt.

4. Schneidverfahren nach dem vorstehenden Anspruch, **dadurch gekennzeichnet, dass** das Biegen des endlosen Glasbandes (10) dadurch erreicht wird, dass eine Kraft (F₁) an die Unterseite (17) des endlosen Glasbandes (10) angelegt wird, so dass das Glasband in einem Bereich, der unter der Längsanreißlinie (30) oder aber in der Nähe der Längsanreißlinie (30) gelegen ist, auf der Seite dieser Linie, die von dem Außenrand (16) des Bandes (10) am weitesten entfernt ist, unter Berücksichtigung des nächstgelegenen Außenrandes, leicht angehoben wird.

5. Schneidverfahren nach einem der Ansprüche 3 bis 4, **dadurch gekennzeichnet, dass** eine Kraft (F_{S}) an die Oberseite (15) des endlosen Glasbandes (10) in einem Bereich zwischen der Längsanreißlinie (30) und dem der Längsanreißlinie am nächsten gelegenen Außenrand (16) angelegt wird, um zum Erzeugen und Fortpflanzen des Längsrisses (32) beizutragen.

6. Schneidverfahren nach einem der vorstehenden Ansprüche, **dadurch gekennzeichnet, dass** ein Zuführen oder mehrmaliges Zuführen von Wärme und/oder Kühlung (81, 82) dazu beiträgt, den Längsriss (32) zu erzeugen und fortzupflanzen.

7. Verfahren nach einem der vorstehenden Ansprüche, **dadurch gekennzeichnet, dass** das Längsanreißen auf einer einzigen der Seiten des Bandes vollzogen wird und dass das Queranreißen auf einer einzigen der Seiten des Bandes vollzogen wird.

8. Vorrichtung für das Schneiden eines mit einer Geschwindigkeit (V_{R}) ablaufenden endlosen Glasbandes (10) nach einem Verfahren, das einen Schritt zum Längsanreißen, der eine Anreißlinie (30) erzeugt, einen nachfolgenden Schritt zum Queranreißen (52), anschließend einen Schritt zum Querbrechen (53) umfasst, umfassend:
- (a) Mittel zum Längsanreißen (51),
- (b) Mittel zum Erzeugen und Fortpflanzen des Längsrisses (32), von der Anreißlinie (30) aus, in der gesamten Dicke des endlosen Glasbandes, um zu einer eine Spiegelfläche aufweisenden Längskante zu führen, und zum Fortpflanzen des Längsrisses (32) mit einer Geschwindigkeit (V_{F}), die im Wesentlichen gleich der Ablauflaufgeschwindigkeit (V_{R}) des endlosen Glasbandes (10) ist und eine hierzu entgegengesetzte Richtung aufweist, wobei die Risserzeugungs- und - fortpflanzungsmittel ein durch ein Biegen oder einen Wärmegradienten in der Dicke des Glases ausgeübtes Spannungssystem aufbauen,
- (c) Mittel zum Queranreißen (52),
- (d) Mittel zum Querbrechen (53),
wobei die Mittel (d) zum Querbrechen, bezogen auf die Ablaufrichtung des Bandes, nach den anderen Mitteln (a), (b) und (c) angeordnet sind.

9. Vorrichtung nach dem vorstehenden Anspruch, **dadurch gekennzeichnet, dass** die Mittel, bezogen auf die Ablaufrichtung des Bandes, in der Reihenfolge (a), dann (b), dann (c), dann (d) angeordnet sind.

10. Vorrichtung nach einem der beiden vorstehenden Ansprüche, **dadurch gekennzeichnet, dass** die Mittel zum Erzeugen und Fortpflanzen des Längsrisses mechanische Mittel (21, 22, 23, 25) umfassen.

11. Vorrichtung nach dem vorstehenden Anspruch, **dadurch gekennzeichnet, dass** wenigstens ein mechanisches Mittel zum Erzeugen und Fortpflanzen des Längsrisses (32) ein Rad (21) ist, das geeignet ist, mit der Unterseite (17) eines endlosen Glasbandes (10) in Kontakt gebracht zu werden.

12. Vorrichtung nach dem vorstehenden Anspruch, **dadurch gekennzeichnet, dass** wenigstens ein Rad (21) durch Regelungsmittel geregelt wird, die insbesondere einen Zylinder (22) umfassen, der insbesondere mit einem Sockel (23) verbunden ist, so dass entweder die Position dieses Rades (21) fest ist oder die unter dem endlosen Glasband (10) angelegte Kraft (F₁) konstant ist.

13. Vorrichtung nach einem der Ansprüche 8 bis 12, **dadurch gekennzeichnet, dass** wenigstens ein mechanisches Mittel zum Erzeugen und Fortpflanzen des Längsrisses (32) ein Rad (25) ist, das auf der Oberseite (15) des endlosen Glasbandes (10) gelegen, insbesondere mit einem Zylinder verbunden ist.

14. Vorrichtung nach einem der Ansprüche 8 bis 13, **dadurch gekennzeichnet, dass** sie wenigstens ein Mittel zum Zuführen von Wärme und/oder Kühlen (81, 82) wenigstens eines Bereiches einer Seite des endlosen Glasbandes (10) umfasst, das zwischen den Mitteln zum Längsanreißen (51) und den Mitteln zum Queranreißen (52) gelegen ist.

15. Vorrichtung nach dem vorstehenden Anspruch, **dadurch gekennzeichnet, dass** wenigstens ein Mittel zum Zuführen von Wärme und/oder Kühlen eine beheizte bzw. gekühlte Rolle (81, 82) ist, die mit einer Oberseite (15) bzw. Unterseite (17) des endlosen Glasbandes (10) in Kontakt ist.

16. Vorrichtung nach einem der beiden vorstehenden Ansprüche, **dadurch gekennzeichnet, dass** wenigstens ein Wärmezufuhrmittel ein Laser ist.
